# EUROPEAN PATENT APPLICATION

(11) **EP 4 553 638 A1**
(43) Date of publication of application: **14.05.2025**
(21) Application number: 24206343.6
(22) Date of filing: 14.10.2024
(51) Int. Cl.: G06F 3/12

(54) **CLOUD PRINT SYSTEM, CLOUD PRINT SERVER SYSTEM AND PRINTING METHOD**

(30) Priority: 08.11.2023 JP 2023191132
(71) Applicant: CANON KABUSHIKI KAISHA, Tokyo 146-8501 (JP)
(72) Inventor: SAKO, Ritsuto, Tokyo, 146-8501 (JP)
(74) Representative: TBK

(57) **Abstract**

A cloud print system comprising a first cloud print server (102) and a second cloud print server (904); wherein the first cloud print server comprises: managing means (913) for managing a second virtual printer (922) of the second cloud print server in association with a first virtual printer (920) of the first cloud print server, storing means (607) for storing a print job (960) submitted (961) to the first virtual printer in one or more first memory devices (505) in association with the first virtual printer, and transmitting mean for transmitting (966) the print job stored in association with the first virtual printer to the second virtual printer according to an instruction from a user (953).

## Description

### BACKGROUND OF THE INVENTION

### Field of the Invention

The present invention relates to a cloud print system, a cloud print server system and a printing method.

### Description of the Related Art

In a known printing service, a user directly transmits a print job from a client terminal such as a PC to a printer to execute printing. On the other hand, Japanese Patent Laid-Open No. 2020-67893 and Japanese Patent Laid-Open No. 2023-141093 propose a cloud printing service using a cloud service provided on the Internet. In the cloud printing service, a client terminal that submits a print job and a printer that executes printing are registered in a print server that provides the cloud printing service, and the print server functions as a virtual printer. The virtual printer is a logical printer which is associated with the print queue and is virtually treated as one printer. An outline of a printing process in the cloud printing service is as follows. A user makes a submit instruction of a print job to a virtual printer from a client terminal. The print job submit by the user is stored in a print queue of the virtual printer and is stored until an instruction to the printer by the user is received. A user logs in to a nearby printer and makes a print instruction. The printer receives a print job from the print server and executes printing. Such a printing method is called pull printing.

The cloud printing service responds to pull printing in which a printing instruction is made without designating a printer, and printing is performed by specifying the printer at the time of executing printing. However, it has not been considered to operate a plurality of cloud printing services in cooperation with each other.

On the other hand, when a plurality of cloud printing services are operated in cooperation with each other as described above, it is necessary to designate a print job in each cloud printing service when executing printing. There is a problem that there are users who do not like such an operation.

### SUMMARY OF THE INVENTION

The present invention enables realization of cooperation of a plurality of cloud printing services and improvement of operability of a user of the cloud printing service.

The present invention in its first aspect provides a cloud print system as specified in claims 1-6.

The present invention in its second aspect provides a second cloud print server system as specified in claims 7-9.

The present invention in its third aspect provides a printing method as specified in claim 10.

The present invention in its forth aspect provides a printing method as specified in claims 11 and 12.

The present invention in its fifth aspect provides a cloud print system as specified in claim 13.

Further features of the present invention will be apparent from the following description of exemplary embodiments with reference to the attached drawings.

### BRIEF DESCRIPTION OF THE DRAWINGS

FIG. 1 is a processing sequence diagram of a cloud printing service according to an example;
FIG. 2 is a hardware configuration diagram of a printing apparatus according to an example;
FIG. 3 is a software configuration diagram of a printing apparatus according to an example;
FIG. 4 is an explanatory diagram of an operation panel of the printing apparatus according to an example;
FIG. 5 is a hardware configuration diagram of a cloud print server according to an example;
FIG. 6 is a software configuration diagram of a cloud print server according to an example;
FIG. 7 is a network diagram showing a configuration of pull printing in a cloud printing service according to an example;
FIG. 8 is a network diagram illustrating a configuration of pull printing in a plurality of cloud printing services according to an example;
FIG. 9 is a network diagram illustrating a configuration of pull printing in a plurality of cloud printing services according to an example;
FIG. 10 is a diagram showing device attribute information when a printing apparatus according to an example registers in a cloud printing service;
FIG. 11 is a diagram showing management information of a printing apparatus managed by a cloud printing service according to an example;
FIG. 12 is a diagram illustrating a screen for setting a virtual printer displayed by the cloud printing service according to an example;
FIG. 13 is a flowchart when a cloud printing service according to an example displays a setting screen of a virtual printer;
FIG. 14 is a diagram illustrating a screen for setting a virtual printer displayed by the cloud printing service according to an example;
FIG. 15 is a diagram illustrating device attribute information of a pull printing function of a printing apparatus according to an example;
FIG. 16 is a network diagram showing a configuration of print connector in a cloud printing service according to an example; and
FIG. 17 is a diagram showing device attribute information of a print connector of a printing apparatus according to an example.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

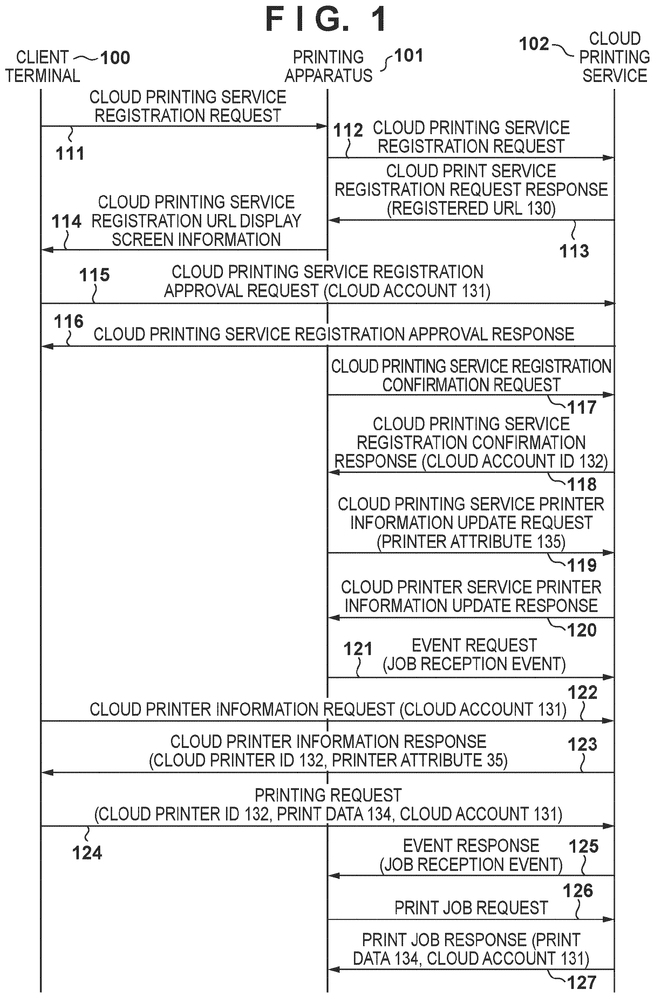

First, a cloud printing processing sequence serving as a premise of the present invention will be described with reference to FIG. 1. It is assumed that the printing apparatus 101 supports a cloud printing function and a WebUI function for operating the printing apparatus 101. It is assumed that the client terminal 100 supports a cloud printing client function and a WebUI client for operating the WebUI. In addition, the cloud printing service 102 represents a cloud print service on the Internet.

First, the user uses the WebUI client of the client terminal 100 to transmit a cloud printing service registration request 111 to the printing apparatus 101 via the WebUI. Upon receiving the request 111, the printing apparatus 101 transmits a cloud printing service registration request 112 to the cloud print service 102. Upon receiving the request 112, the cloud printing service 102 transmits, to the printing apparatus 101, a cloud print service registration request response 113 including a registration URL 130 for cloud print registration. Upon receiving a response 113, the printing apparatus 101 transmits, to the client terminal 100 via the WebUI, registration URL display screen information 114 including the cloud printing service registration URL.

Upon receiving the screen information 114, the client terminal 100 displays the registration URL on the WebUI client. The user operates the WebUI client of the client terminal 100 to access the displayed registration URL. The client terminal 100 thereby transmits a cloud printing service registration approval request 115 including a cloud account 131 to the cloud printing service 102. Upon receiving the registration approval request 115, the cloud printing service 102 transmits a cloud printing service registration approval response 116 to the client terminal 100. The cloud account 131 indicates a user who has authority to use the cloud printing service 102, and the user has registered a user account in the cloud printing service 102 in advance.

The printing apparatus 101 transmits a cloud printing service registration confirmation request 117 to the cloud printing service 102. Upon receiving the request 117, the cloud printing service 102 transmits a cloud printing service registration confirmation response 118 including a cloud printer ID 132 to the printing apparatus 101. At this stage, the printing apparatus 101 is in a state of being registered in the cloud printing service 102 and is in a state of being able to use the cloud printing service 102.

When the registration is completed in the above sequence, the printing apparatus 101 then transmits a cloud printing service printer information update request 119 to the cloud printing service 102. The request 119 includes a printer attribute 135 of the printing apparatus 101. Here, the printer attribute 135 is a printer name, a manufacturer, a model name, and the like. Upon receiving the request 119 from the printing apparatus 101, the cloud printing service 102 transmits a cloud printer service printer information update response 120 to the printing apparatus 101.

Next, the printing apparatus 101 transmits an event request 121 to the cloud printing service 102. In the event request 121, a job reception event is designated as a type of event to be requested.

The client terminal 100 transmits a cloud printer information request 122 to the cloud printing service 102. The cloud printer information request 122 includes a cloud account 131. Upon receiving the cloud printer information request 122, the cloud printing service 102 acquires printer information that can be used by the cloud account 131 included in the cloud printer information request. Then, a cloud printer information response 123 storing a cloud printer ID132 indicating the printer information and the printer attribute 135 is transmitted to the client terminal 100. Here, the printer attribute 135 is transmitted from the printing apparatus 101 to the cloud printing service 102 by the cloud printing service printer information update request 119.

The client terminal 100 transmits a printing request 124 including the cloud printer ID132, the print data 134, and the cloud account 131 to the cloud printing service 102. Upon receiving the printing request 124, the cloud printing service 102 transmits an event response 125 to the printing apparatus 101. The event response 125 is transmitted as a response to the event request 121, and a job reception event is designated as the type of event.

Upon receiving the event response 125, the printing apparatus 101 transmits a print job request 126 to the cloud printing service 102. The cloud printing service 102 transmits a print job response 127 including the print data 134 and the cloud account 131 to the printing apparatus 101. The printing apparatus 101 prints the received print data.

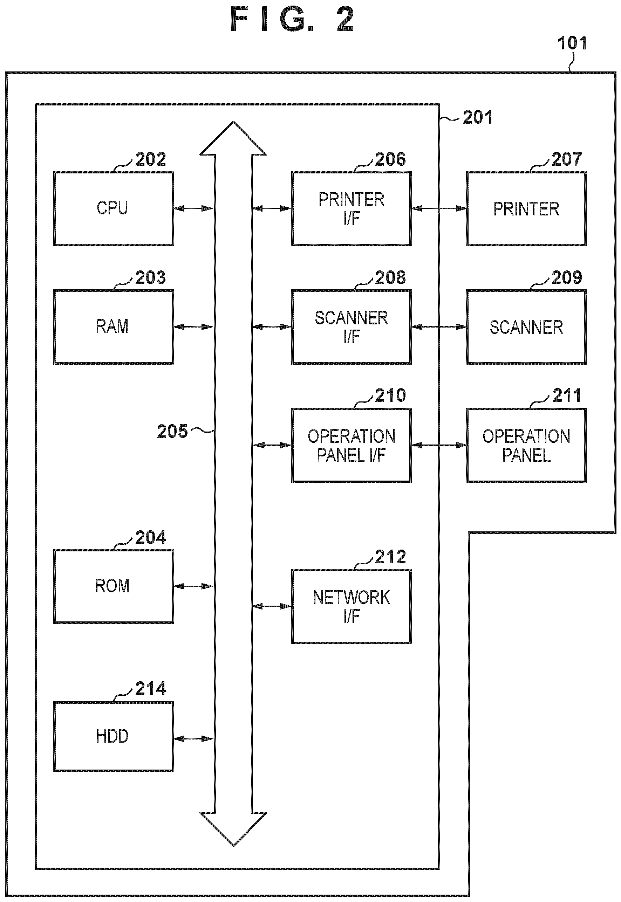

A hardware configuration of the printing apparatus 101 according to the present example will be described with reference to FIG. 2. The printing apparatus 101 includes a control unit 201, a printer 207, a scanner 209, and an operation panel 211. The control unit 201 includes a CPU 202, a RAM 203, a ROM 204, a system bus 205, a printer I/F 206, a scanner I/F 208, an operation panel I/F 210, and a network I/F 212.

The control unit 201 including the CPU 202 controls the operation of the entire printing apparatus 101. The CPU 202 reads a control program stored in the ROM 204 and performs various controls such as communication control. The RAM 203 is used as a main memory or a temporary storage region such as a work area for the CPU 202. The HDD 214 stores data, various programs, or various information tables.

The printer I/F 206 serves as an interface that outputs an image signal to the printer 207 (printer engine). The scanner I/F 208 also serves as an interface for inputting a read image signal from the scanner 209 (scanner engine). The CPU 202 processes the image signal input from the scanner I/F 208, and outputs the processed image signal to the printer I/F 206 as a recorded image signal.

An operation unit I/F 210 connects the operation panel 211 and the control unit 201. The operation panel 211 includes a liquid crystal display unit having a touch panel function, a keyboard, and the like.

The network I/F 212 transmits information to an external terminal such as the client terminal 100 or the cloud printing service 102, or receives various types of information from the external device.

Each of the blocks in the control unit 201 are connected by a system bus 205.

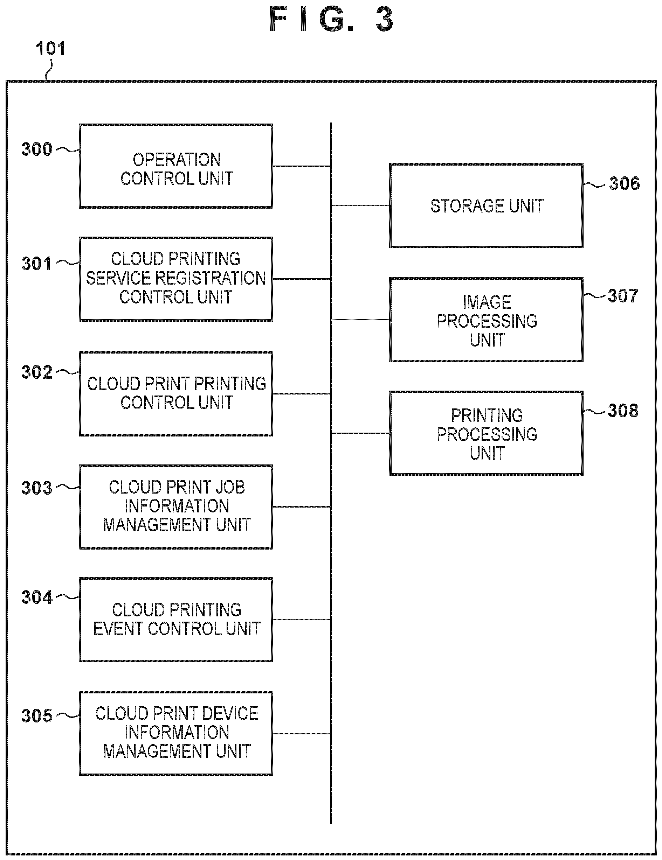

A software configuration of the printing apparatus 101 according to the present example will be described with reference to FIG. 3. The software of the printing apparatus includes an operation control unit 300, a cloud printing service registration control unit 301, a cloud print printing control unit 302, a cloud print job information management unit 303, a cloud printing event control unit 304, a cloud print device information management unit 305, a storage unit 306, an image processing unit 307, and a printing processing unit 308. Each function unit illustrated in FIG. 3 is realized by the CPU 202 included in the printing apparatus 101 reading a control program stored in the ROM 204 or the HDD 214 into the RAM 203 and executing the control program.

The operation control unit 300 controls the operation panel 211. An operation menu is displayed on the operation panel 211 to wait for an instruction input from the user, the received instruction content is notified to another function unit, and an instruction result is displayed on the operation panel 211.

The cloud printing service registration control unit 301 analyzes cloud printing service registration request 111 received from client terminal 100, and transmits cloud printing service registration request 112 to the cloud printing service 102. The cloud printing service registration process is thereby controlled.

The cloud print printing control unit 302 transfers the print data 134 received from the cloud printing service 102 to the image processing unit 307.

The image processing unit 307 performs a process of rendering a print job to image data for printing.

The printing processing unit 308 performs a process of printing the image data rendered by the image processing unit 307.

The cloud print job information management unit 303 manages job information of the printing apparatus 101 and notifies the cloud printing service 102.

The cloud printing event control unit 304 controls event transmission and event reception processes between the printing apparatus 101 and the cloud printing service 102.

The cloud print device information management unit 305 manages device information of the printing apparatus 101 and notifies the cloud printing service 102 of the device information.

The storage unit 306 stores designated data in the ROM 204 or the HDD 214 or reads the stored data according to an instruction from another function unit. An example of the data managed by the storage unit 306 is print job information.

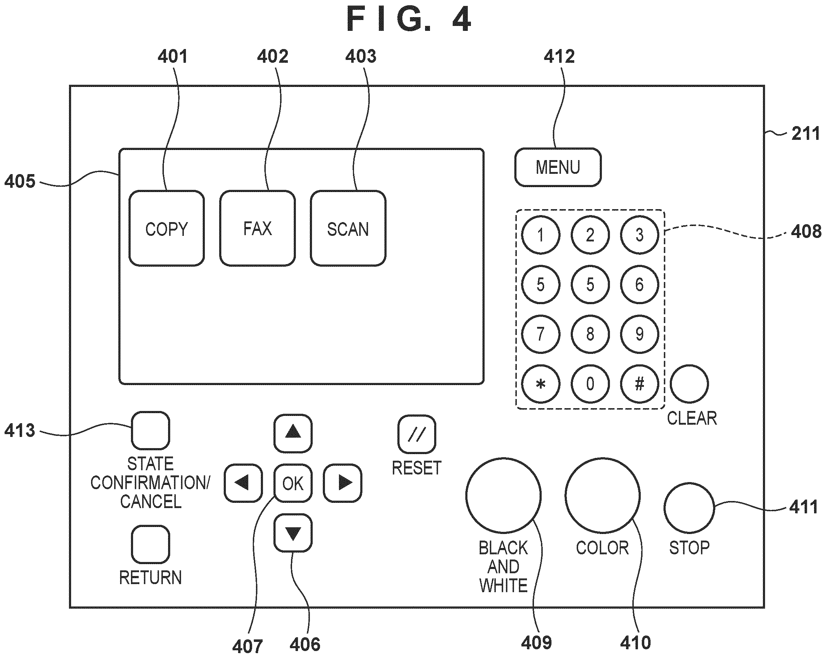

The operation panel 211 of the printing apparatus 101 according to the present example will be described with reference to FIG. 4. The operation panel 211 includes a display panel 405, a direction key 406, an OK key 407, a ten key 408, a black-and-white button 409, a color button 410, a stop button 411, a menu button 412, and a status confirmation/cancel button 413. The display panel 405 is a display panel using an LCD or the like. A copy button 401, a FAX button 402, and a scan button 403 are displayed on the display panel 405.

The copy button 401 is a button operated when performing copy using the printing apparatus 101, and a copy operation screen is displayed on the display panel 405 by operating the copy button 401. The FAX button 402 is a button operated when performing FAX using the printing apparatus 101, and a FAX operation screen is displayed on the display panel 405 by operating the FAX button 402. The scan button 403 is a button operated when performing scanning using the printing apparatus 101, and a scan operation screen is displayed on the display panel 405 by operating the scan button 403. In addition, a dialog for exchanging with the user is also displayed on the display panel 405. Furthermore, in the present example, a login screen of the user and a print job list display screen are displayed.

The ten key 408 is used to input numbers and the like. The OK key 407 is used to determine the display content of display panel 405, and the like. The direction key 406 is used to select a menu or the like displayed on the display panel 405. The black-and-white button 409 and the color button 410 are used when executing black-and-white copy and color copy, respectively. The stop button 411 is used when stopping the process. The menu button 412 is used when displaying a menu screen for setting the printing apparatus 101. The status confirmation/cancel button 413 is used to confirm the status of the printing apparatus 101, such as a list of print jobs received by the printing apparatus 101.

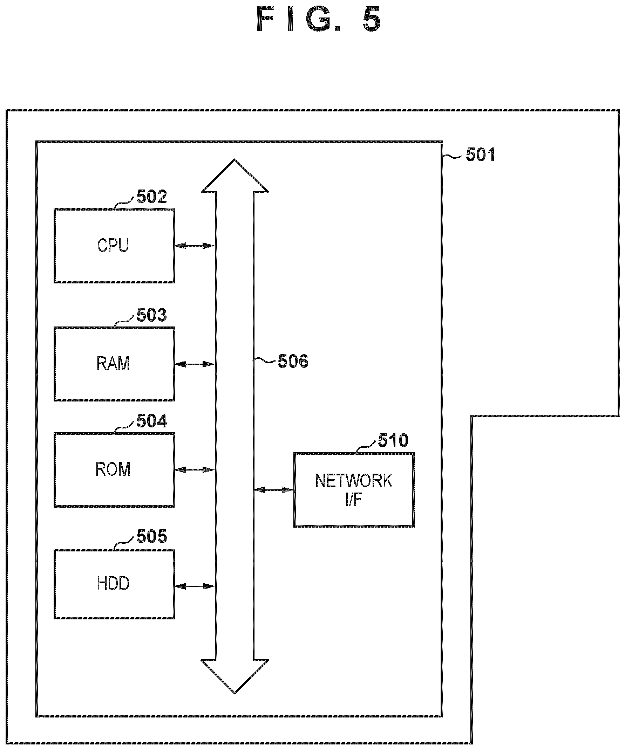

A hardware configuration of a cloud print server on which the cloud printing services 102, 804, and 904 according to the present example are executed will be described with reference to FIG. 5. The cloud print server includes a control unit 501, and the control unit 501 includes a CPU 502, a RAM 503, a ROM 504, a HDD 505, a system bus 506, and a network I/F 510. Each block in the control unit 501 is connected by a system bus 506.

The control unit 501 including the CPU 502 controls the overall operation of the cloud printing services 102, 804, and 904. The CPU 502 performs various types of control such as communication control by reading a control program stored in the ROM 504 to the RAM 503 and executing the control program. The RAM 503 is used as a main memory or a temporary storage region such as a work area for the CPU 502. The HDD 505 stores data, various programs, or various information tables. The network I/F 510 transmits information to an external terminal such as the client terminal 100 or the printing apparatus 101, or receives various types of information from the external device.

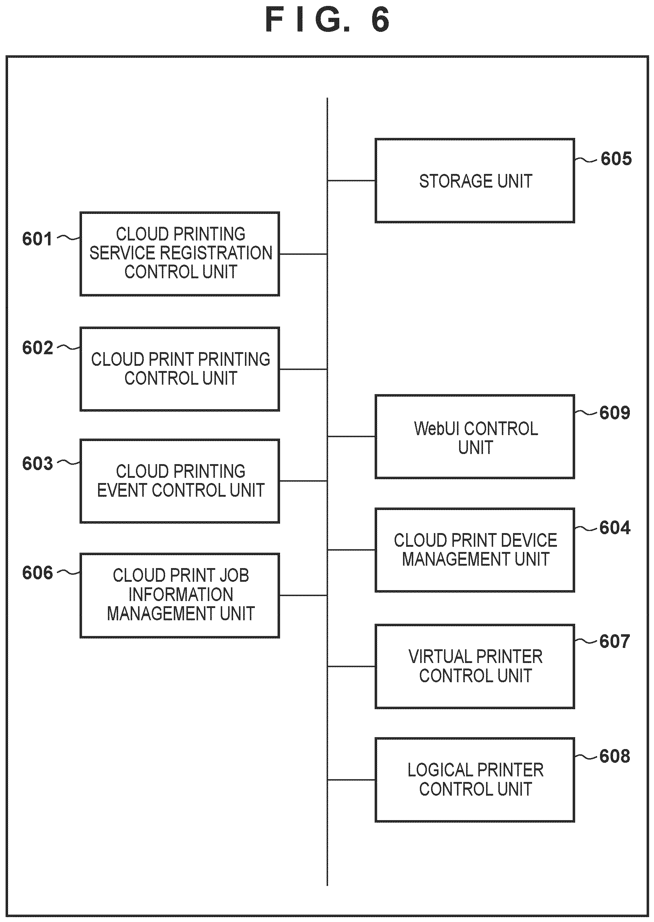

A software configuration of the cloud print server on which the cloud printing services 102, 804, and 904 according to the present example are executed will be described with reference to FIG. 6. Although the cloud printing service 102 will be described as an example, the cloud printing services 804 and 904 are similar. The software of the cloud print server includes a cloud printing service registration control unit 601, a cloud print printing control unit 602, a cloud printing event control unit 603, a cloud print device management unit 604, a storage unit 605, a cloud print job information management unit 606, a virtual printer control unit 607, a logical printer control unit 608, and a WebUI control unit 609. Each function unit illustrated in FIG. 6 is implemented by the CPU 502 of the cloud print server reading a control program stored in the ROM 504 to the RAM 503 and executing the control program.

The cloud printing service registration control unit 601 receives a cloud printing service registration request 112 from the printing apparatus 101, and executes a process of registering the printing apparatus 101 in the cloud printing service 102. The cloud print printing control unit 602 receives a printing request 124 from the client terminal 100, and executes a process of transmitting the print data 134 included in the printing request 124 to the printing apparatus 101. In response to the event request 121 from the printing apparatus 101, the cloud printing event control unit 603 executes a process of transmitting an event response 125 in accordance with whether or not an event has occurred. The cloud print job information management unit 606 manages information and a status of a print job.

The cloud print device management unit 604 manages the plurality of printing apparatuses 101 registered in the cloud printing service 102. Specifically, capability information of a printing apparatus corresponding to each printing apparatus 101 and information of a print queue in which a print job is spooled are stored and managed.

The storage unit 605 stores designated data in the ROM 504 or the HDD 505 or reads the stored data according to an instruction from another function unit. Examples of the data managed by the storage unit 605 include print data 134, event information, and capability information of the logical printing apparatus 101. Here, the capability information is information regarding functions of the printing apparatus such as availability of double-sided printing, availability of color printing, availability of allocation printing, and sheet type.

The virtual printer control unit 607 manages information on virtual printers registered in the cloud printing services 102, 803, and 903. Here, the virtual printer is a conceptual printer object existing on the cloud printing service 102. For example, the virtual printer 720 of the cloud printing service 102 does not directly correspond to the printing apparatus 101 that is a physical printer. The information of the virtual printer 720 includes capability information of the virtual printer 720, a print queue, information on the associated logical printer 710, and the like.

The logical printer control unit 608 manages information on the logical printers 710 registered in the cloud printing service 102. Here, the logical printer 710 is a conceptual printer object existing on the cloud printing service 102. The logical printer 710 is generated when the printing apparatus 101 is registered in the cloud printing service 102, and has a one-to-one correspondence with the logical printing apparatus 101. The information of the logical printer 710 includes capability information of the logical printer 710, information of a print queue, and the like.

The WebUI control unit 609 performs control for setting the cloud printing service 102 via the Web. Specifically, in response to a request from the client, a setting screen is generated as Web content and is responded to the client.

The software configuration of the cloud print server on which the cloud printing services 804 and 904 are executed is also similar to that in FIG. 6.

Hereinafter, execution of printing by the cloud printing service 102 will be specifically described. In the present example, in pull printing in a cloud printing service environment configured such that a plurality of cloud printing services operate in cooperation, printing is executed by a user performing a pull printing operation in each cloud printing environment.

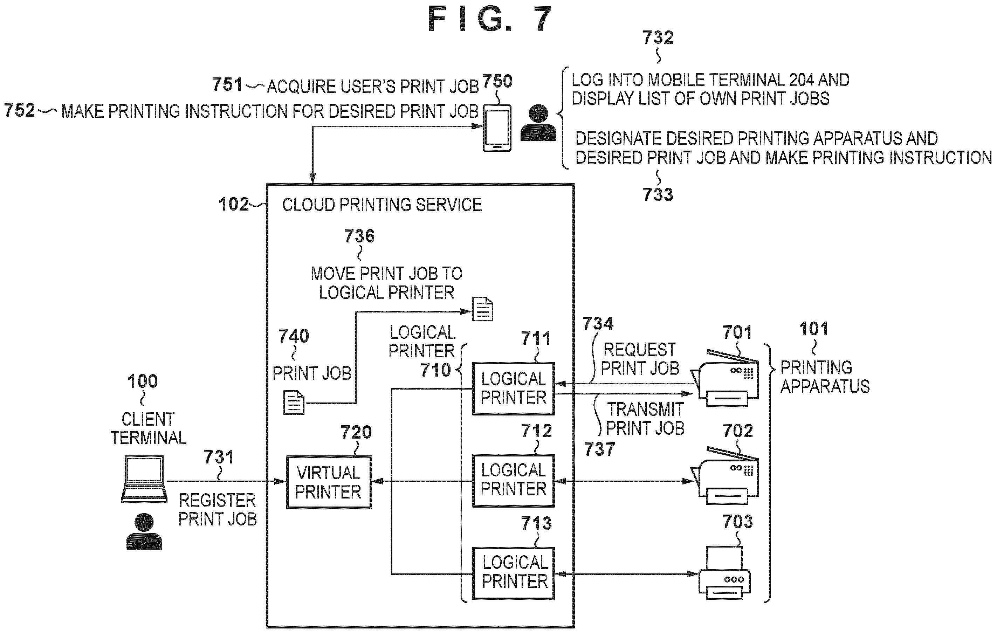

FIG. 7 is a network diagram illustrating a configuration of pull printing in the cloud printing service according to the present example. A logical printer 710 corresponding to the printing apparatus 101 on a one-to-one basis exists in the cloud printing service 102. The logical printer 710 reflects the state of the corresponding printing apparatus 101 and the state of a job being printed. In this example, the printing apparatus 701 corresponds to the logical printer 711, the printing apparatus 702 corresponds to the logical printer 712, and the printing apparatus 703 corresponds to the logical printer 713. The mobile terminal 750 can display (732) a list of print jobs of the logged-in user. This is realized by the mobile terminal 750 acquiring (751) the print job of the user who is logged in from the cloud printing service 102.

Furthermore, in the mobile terminal 750, the user can issue a printing instruction to the cloud printing service 102 by designating the printing apparatus 101 and the print job (733). This is realized by the mobile terminal 750 transmitting (752) the print job and the information of the printing apparatus 101 to the cloud printing service 102.

The cloud printing service 102 includes a virtual printer 720. A plurality of logical printers 710 can be associated with the virtual printer 720. In the present example, the logical printer 711, the logical printer 712, and the logical printer 713 are associated with the virtual printer 720.

A processing flow of pull printing using the virtual printer 720 will be described below. First, the user stores a print job in the virtual printer 720 from the client terminal 100 (731). The user logs in to the mobile terminal 750 and displays his/her print job list (732). Then, a desired printing apparatus (the printing apparatus 701 in the present example) and a desired job are designated, and printing execution is instructed (733). The virtual printer 720 moves the print job 740 to the logical printer 711 corresponding to the printing apparatus 701 (736). The printing apparatus 701 requests for a print job to the corresponding logical printer 711 (734). This requesting process may be polling. The logical printer 711 transmits the print job 740 to the printing apparatus 701 as a response to the print job request 734 (737). The printing apparatus 701 prints the received print job 740.

As a result, the user can print the print job submit to the virtual printer 720 by any printing apparatus 101 associated with the virtual printer 720. The cloud printing service 102 and the printing apparatus 701 constitute a pull printing system.

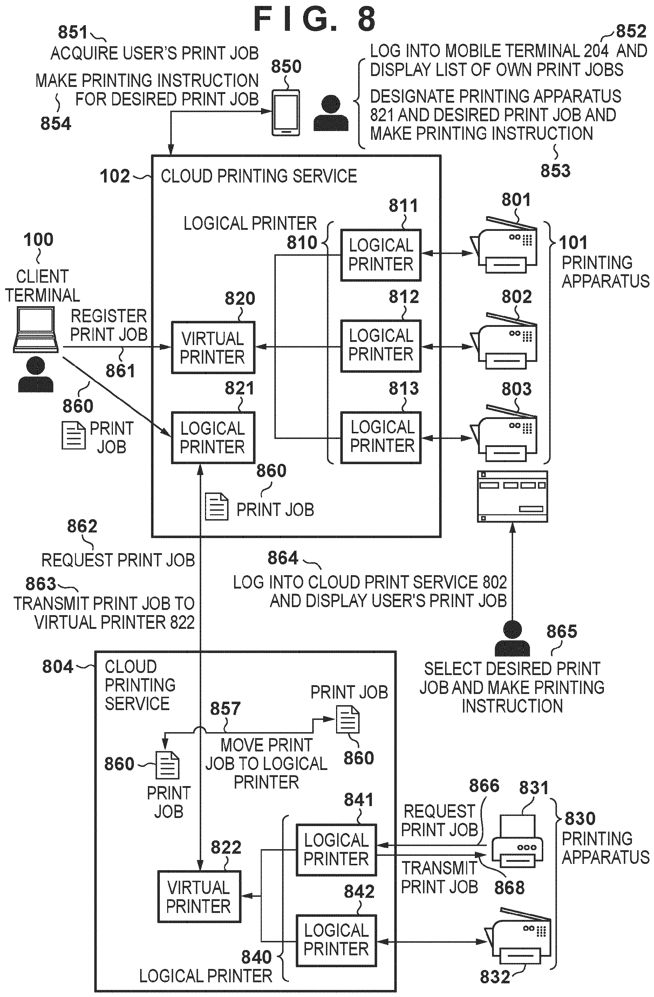

Pull printing in the cloud print system configured so that a plurality of cloud printing services of the present example operate in cooperation with each other will be described with reference to FIG. 8.

The cloud printing service 102, and the client terminal 100 and the printing apparatus 101 connected thereto are the same as those described in FIG. 7. Here, the cloud printing service 102 and the cloud printing service 804 operate in cooperation with each other. Specifically, the logical printer (here, the logical printer 821) registered in the cloud printing service 102 corresponds to the virtual printer (here, the virtual printer 822) of the cloud printing service 804. That is, in FIG. 8, the logical printer 821 is associated not with the physical printing apparatus but with the virtual printer 822 of another cloud printing service. The cloud printing service 804 includes a virtual printer 822 and a logical printer 840. The logical printer 841 and the logical printer 842 are associated with the virtual printer 822.

The cloud printing service 102 and the cloud printing service 804 have different authentication methods. The cloud printing service 102 is an authentication method for collectively managing the cloud service. On the other hand, the cloud printing service 804 supports on-premise authentication in a company. The authentication method of the cloud printing service is not limited thereto, and may be another method or the same method.

A logical printer 840 corresponding to the printing apparatus 830 on a one-to-one basis exists in the cloud printing service 804. The logical printer 840 reflects the state of the corresponding printing apparatus 830 and the state of a job being printed. In the present example, the printing apparatus 831 corresponds to the logical printer 841, and the printing apparatus 832 corresponds to the logical printer 842. The user can confirm his/her job on the cloud printing service 804 by logging in to the cloud printing service 804 from the printing apparatus 831 (864). This is achieved by the printing apparatus 831 acquiring the print job of the logged-in user from the cloud printing service 804.

In the printing apparatus 831, the user can issue a printing instruction to the cloud printing service 804 by designating the print job (865). This is achieved by the printing apparatus 831 transmitting print job information to the cloud printing service 804 and requesting (866) a print job.

Hereinafter, a description will be given of a process of pull printing a print job submit to the cloud printing service 102 by the printing apparatus 830 of the cloud printing service 804.

First, the user stores the print job 860 in the cloud printing service 102 from the client terminal 100 (861). At this time, the client terminal 100 can select either the virtual printer 820 or the logical printer 821 and store the print job. The process of storing the print job in the virtual printer 820 and performing the pull printing by the printing apparatus 801 to 803 is the same as that in FIG. 7, and thus the description thereof will be omitted.

Here, the user selects the logical printer 821 and stores (861) the print job 860. On the other hand, the virtual printer 822 of the cloud printing service 804 requests a print job from the corresponding logical printer 821 (862). This requesting process may be polling. The logical printer 821 transmits the print job 860 to the virtual printer 822 as a response to the print job request 862 (863). The virtual printer 822 of the cloud printing service 804 receives the print job.

The user logs in to the cloud printing service 804 from the printing apparatus 831 and displays his/her print job list (864). Then, a desired print job is designated and printing execution is instructed (865). The printing apparatus 831 requests the corresponding logical printer 841 for the print job designated in 865 (866). The logical printer 841 requests for a print job to the virtual printer 822. The virtual printer 822 moves the print job 860 to the logical printer 841 (867). The logical printer 841 transmits the print job 860 to the printing apparatus 831 as a response to the print job request 866 (868). The printing apparatus 831 prints the received print job 860.

As a result, the user can print the print job submit to the logical printer 821 of the cloud printing service 102 by any printing apparatus 801 associated with the virtual printer 822 of the cloud printing service 804. Furthermore, the print job submit to the cloud printing service 102 can be managed by the cloud printing service 804, and the management of the job submit to the printing apparatus can be collectively managed by the cloud printing service 804. Not only the cloud printing service 804 but also a cloud printing service 102 corresponding to access from outside the company can be used.

### Second Embodiment

In the embodiment of FIG. 8, when a print job is submitted to the cloud printing service 102, the virtual printer 820 and the logical printer 821 need to be selected. Then, it takes time and effort for the user of the cloud printing service 102 to select a printer when submitting a print job. In addition, a print job submit to the cloud printing service 102 cannot be executed by both an arbitrary printing apparatus associated with the cloud printing service 102 and an arbitrary printing apparatus associated with the cloud printing service 804. Depending on whether the virtual printer 820 is selected or the logical printer 821 is selected, printing can be performed only by a printing apparatus associated with any of the cloud printing services.

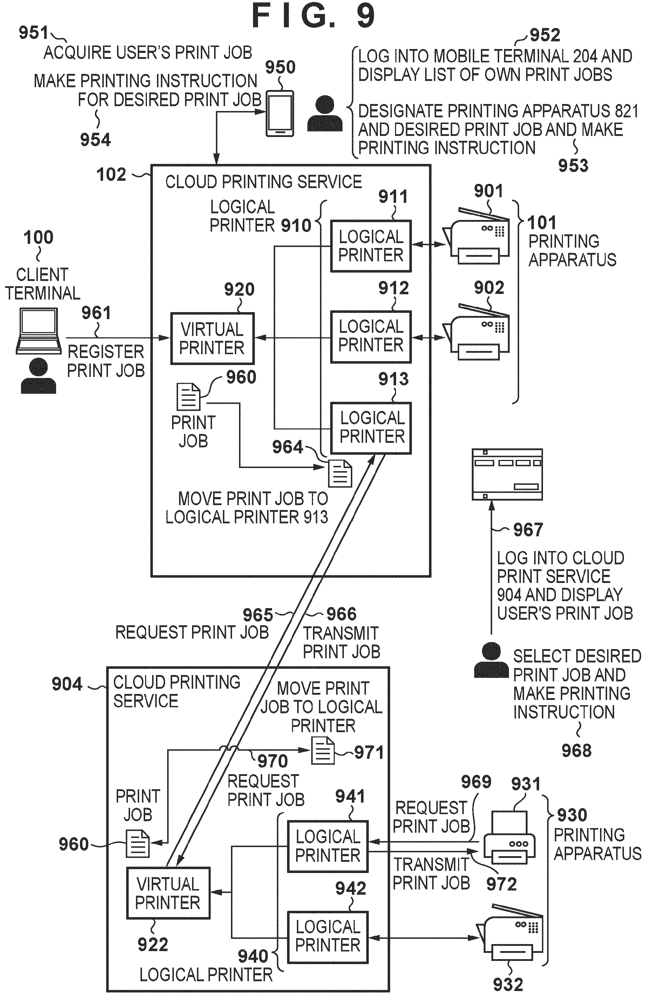

Pull printing in the cloud print system configured so that a plurality of cloud printing services of the second example operate in cooperation with each other will be described with reference to FIG. 9. The cloud printing service 102, and the client terminal 100 and the printing apparatus 101 connected thereto are the same as those described in FIGS. 7 and 8. In the present example as well, the cloud printing service 102 and the cloud printing service 904 operate in cooperation with each other. Specifically, the logical printer (here, the logical printer 913) registered in the cloud printing service 102 corresponds to the virtual printer (here, the virtual printer 922) of the cloud printing service 904. That is, not the physical printing apparatus but the virtual printer 922 is associated with the logical printer 913. Similar to the cloud printing service 102, the cloud printing service 904 includes a virtual printer 920 and a logical printer 940. Here, the logical printer 941 and the logical printer 942 are associated with the virtual printer 922. In the past, in a case where the virtual printer 920 of another cloud printing service 904 is registered in the virtual printer 922, printing cannot be executed even if pull printing is to be executed from the printing apparatus 930 since the print job is retained in the virtual printer 920. The present example makes this possible.

The cloud printing service 102 and the cloud printing service 904 have different authentication methods. The cloud printing service 102 is an authentication method for collectively managing the cloud service. On the other hand, the cloud printing service 904 supports on-premise authentication in a company. The authentication method of the cloud printing service is not limited thereto, and may be another method or the same method.

A logical printer 940 corresponding to the printing apparatus 930 on a one-to-one basis exists in the cloud printing service 904. The logical printer 940 reflects the state of the corresponding printing apparatus 930 and the state of a job being printed. In the present example, the printing apparatus 931 corresponds to the logical printer 941, and the printing apparatus 932 corresponds to the logical printer 942. The user can confirm his/her job on the cloud printing service 904 by logging in to the cloud printing service 904 from the printing apparatus 931. This is achieved by the printing apparatus 931 acquiring the print job of the logged-in user from the cloud printing service 904 (967).

In the printing apparatus 931, the user can issue a printing instruction to the cloud printing service 904 by designating the print job (968). This is achieved by the printing apparatus 931 transmitting print job information to the cloud printing service 904 and requesting (969) a print job.

Hereinafter, a processing flow of the pull printing using the virtual printer 922 will be described. The first half of the processing flow is the same as the processing flow of the pull printing in the cloud printing service 102 described with reference to FIG. 7.

First, the user stores a print job 960 in the virtual printer 920 from the client terminal 100 (961). The user logs in to the mobile terminal 950 and displays his/her print job list (952). Then, a desired printing apparatus (the logical printer 913 in the present example) and a desired job are designated, and printing execution is instructed (953). Then, the virtual printer 920 moves the print job to the logical printer 913 (964).

On the other hand, the virtual printer 922 of the cloud printing service 904 requests a print job from the corresponding logical printer 913 (965). This requesting process may be polling. The logical printer 913 transmits the print job 960 to the virtual printer 922 as a response to the print job request 965 (966). The virtual printer 922 of the cloud printing service 904 receives the print job 960.

The user logs in to the cloud printing service 904 from the printing apparatus 931 and displays his/her print job list (967). Then, a desired print job is designated and printing execution is instructed (968). The printing apparatus 931 requests the corresponding logical printer 941 for the print job designated in 968 (969). The logical printer 941 requests for a print job to the virtual printer 922 (970). The virtual printer 922 moves the print job 960 to the logical printer 941 (971). The logical printer 941 transmits the print job 960 to the printing apparatus 931 as a response to the print job request 969 (972). The printing apparatus 931 prints the received print job 960.

According to the present example, the user can print the print job submit to the logical printer 920 of the cloud printing service 102 by any printing apparatus 901 associated with the virtual printer 922 of the cloud printing service 904. Furthermore, the user can perform printing by pull printing with any printing apparatus associated with either the cloud printing service 102 or the cloud printing service 904. Furthermore, the print job submit to the cloud printing service 102 can be managed by the cloud printing service 904, and the management of the job submit to the printing apparatus can be collectively managed by the cloud printing service 904. Not only the cloud printing service 904 but also a cloud printing service 904 corresponding to access from outside the company can be used.

### Third Embodiment

In the second example, it is necessary to designate two print jobs, the printing instruction 953 issued by the mobile terminal 950 in the cloud printing service 102 and the printing instruction 968 issued by the printing apparatus 930 in the cloud printing service 904. For this reason, there is a problem that it is difficult for the user to understand the execution instruction of the pull printing after the first printing instruction 853 by the mobile terminal 950 is performed. In the present example, the user is prompted to issue a second printing instruction 968 by the printing apparatus 930.

A third example will be described with reference to FIG. 9. First, the user stores a print job 960 in the virtual printer 920 from the client terminal 100 (961). The user logs in to the mobile terminal 950 and displays his/her print job list (952). Then, a desired printing apparatus (the virtual printer 922 of the cloud printing service 904 in the present example) and a desired job are designated, and printing execution is instructed (953). Then, the virtual printer 920 moves the print job to the logical printer 913 (964).

On the other hand, the virtual printer 922 of the cloud printing service 904 requests a print job from the corresponding logical printer 913 (965). This requesting process may be polling. The logical printer 913 transmits the print job 960 to the virtual printer 922 as a response to the print job request 965 (966). The virtual printer 922 of the cloud printing service 904 receives the print job 960. The process up to this point is the same as that in the second example.

To the mobile terminal 950 that has selected another cloud printing service 904 as the output destination and has instructed the printing execution, a message such as "Next, please execute printing instruction in "cloud printing service 904"" is output. In accordance with this message, the user logs in to the cloud printing service 904 from the printing apparatus 931 associated with the cloud printing service 904 and displays his/her own print job list (967).

Then, a desired print job is designated and printing execution is instructed (968). The printing apparatus 931 requests the corresponding logical printer 941 for the print job designated in 968 (969). The logical printer 941 requests for a print job to the virtual printer 922 (970). The virtual printer 922 moves the print job 960 to the logical printer 941 (971). The logical printer 941 transmits the print job 960 to the printing apparatus 931 as a response to the print job request 969 (972). The printing apparatus 931 prints the received print job 960.

It is also possible to log in from the printing apparatus 931 to the cloud printing service 904 using an existing IC card or an IC chip of a mobile terminal. In this case, the display may be changed to "Next, please touch mobile terminal on printing apparatus of "cloud printing service 904"" as the message to prompt the login.

According to the present example, since a message prompting a printing instruction in the different cloud printing service 904 is output to the mobile terminal 950 of the user, designation of the second print job can be executed without delay.

### Fourth Embodiment

Next, a fourth example will be described. In the fourth example, in pull printing in a cloud printing service environment configured such that a plurality of cloud printing services operate in cooperation with each other, printing is executed by a user performing respective pull printing operations. In the second and third examples, as described above, the print job submit to the cloud printing service 102 can be printed by any printing apparatus 901 associated with the cloud printing service 904. However, in FIG. 9, in order to execute printing by the printing apparatus 901, it is necessary to perform an operation of designation of two print jobs, that is, designation of a print job in the mobile terminal 950 and designation of a print job in the printing apparatus 901. Some users may not prefer to designate two print jobs. Therefore, in the fourth example, in a case where a printing apparatus is associated with a virtual printer, the user is notified that the printing apparatus is a virtual printer of another cloud printing service, and attention of the user is called so that setting can be made only in the case of a physical printing apparatus. If the user does not associate a virtual printer of another cloud printing service with the virtual printer, the user will coordinate a plurality of cloud printing services in the form of FIG. 8 of the first example. Note that an administrator can switch a setting as to whether or not a virtual printer of another cloud printing service can be registered in the virtual printer as necessary.

Hereinafter, the fourth example will be described. The fourth example will be described assuming that the printing apparatus 101 and the cloud printing service 102 communicate with each other using the Internet Printing Protocol (IPP). In the fourth example, when registering a printing apparatus in a cloud printing service, a user determines whether or not to associate the printing apparatus with a virtual printer based on a device type (device_type) of the printing apparatus.

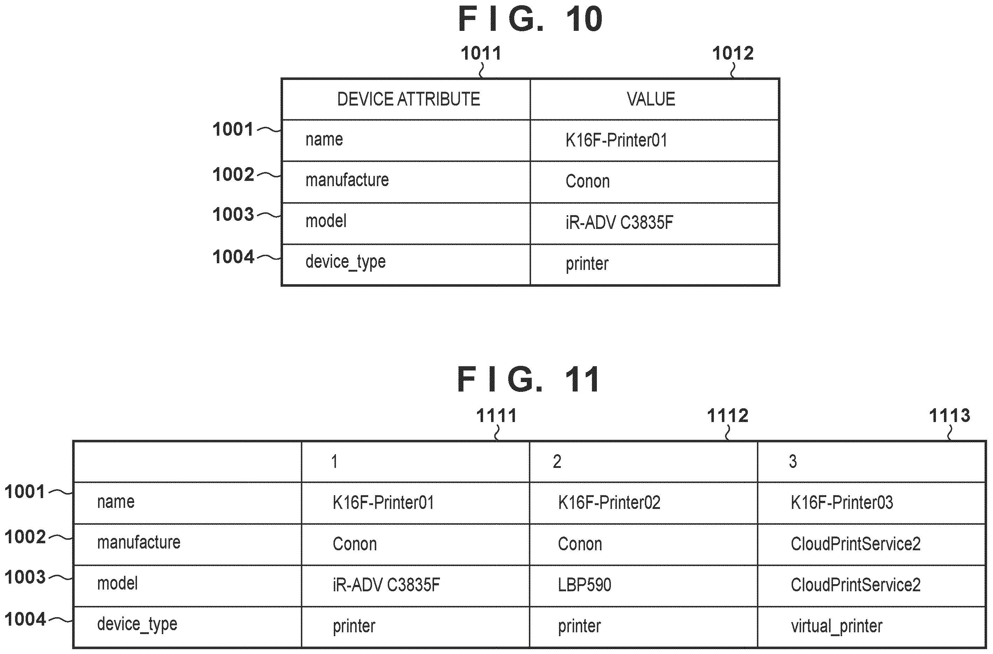

The device attribute information when registering the printing apparatus in the cloud printing service will be described with reference to FIG. 10. As illustrated in FIG. 1, the printing apparatus 101 transmits a cloud printing service registration request 112 to the cloud printing service 102. The cloud printing service registration request 112 includes device attribute information of the printing apparatus 101. This described by device attribute information in FIG. 10. The device attribute 1011 indicates an item of the device attribute. A value 1012 indicates a value stored in correspondence with each device attribute. The device attribute name (1001) indicates a name set in the printing apparatus. In the present example, K16F-Printer01 is set. The device attribute manufacture (1002) indicates a manufacturer of the printing apparatus. In the present example, Conon is set. The device attribute model (1003) indicates the model name of the printing apparatus. In the present example, iR-ADV C3835F is set. The device attribute device_type (1004) indicates the type of the printing apparatus. In the present example, a printing apparatus indicating a printing apparatus is set.

Management information of the printing apparatus managed by the cloud printing service 102 in the present example will be described with reference to FIG. 11. As illustrated in FIG. 1, the printing apparatus 101 registers the cloud printing service in the cloud printing service 102 by the cloud printing service registration request 112. At that time, the cloud printing service 102 acquires the device attribute information described with reference to FIG. 10 from the printing apparatus 101. FIG. 11 illustrates the device attribute information of the printing apparatus 101 acquired by the cloud printing service 102, and the cloud printing service 102 manages the device attribute information of the printing apparatus 101 of FIG. 11 as management information.

In the present example, three printing apparatuses are registered in the cloud printing service 102. The device information of each of the printing apparatuses 1111, 1112, and 1113 is stored and managed as the management information. The first printing apparatus 1111 is the printing apparatus described in FIG. 10. In the second printing apparatus 1112, the device attribute name (1001) is K16F-Printer02. The device attribute manufacture (1002) is Conon. The device attribute model (1003) is LBP590. The device attribute device_type (1004) is printer. In the third printing apparatus 1113, the device attribute name (1001) is K16F-Printer03. In the present example, the third printing apparatus 1113 is the virtual printer 822 in FIG. 8. The device attribute manufacture (1002) is CloudPrintService2. The device attribute model (1003) is CloudPrintService2. The device attribute device_type (1004) is virtual_printer (virtual printer).

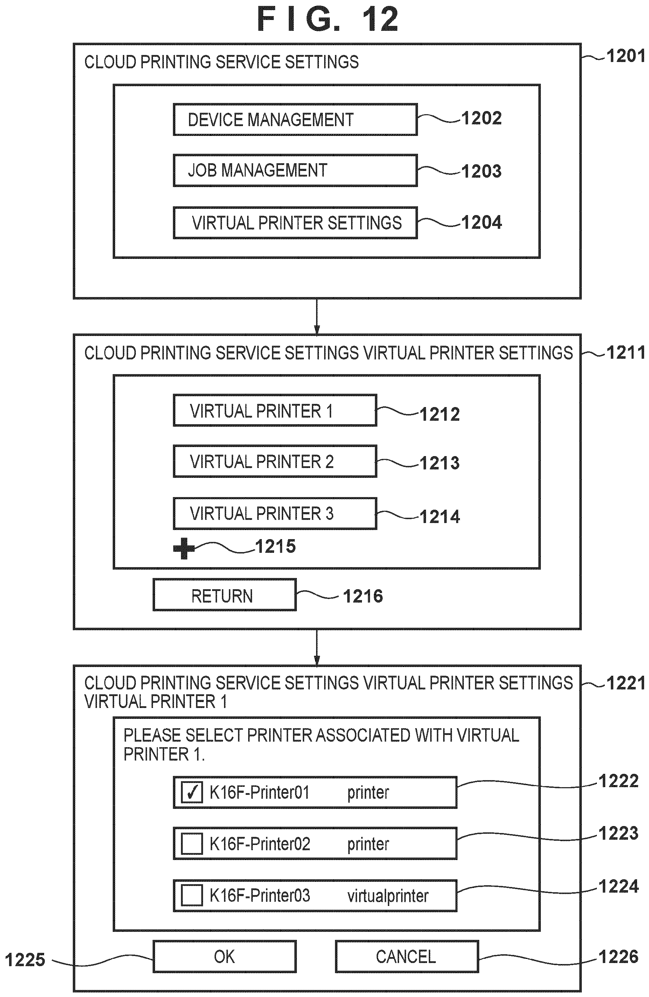

A screen for setting a virtual printer in the cloud printing service 102 of the present example will be described with reference to FIG. 12. A screen 1201, a screen 1211, and a screen 1212 are management screens of the cloud printing service 102 that can be accessed by a browser from the client terminal 100 such as a PC. The screen 1201 is a top screen of the cloud printing service setting. When the device management 1202 is selection operated, the screen transitions to a device management screen (not illustrated). On the device management screen, it is possible to confirm the state of the device and change the setting of the device. When a selection operation is performed on the job management 1203, the screen transitions to a job management screen (not illustrated). On the job management screen, it is possible to confirm the state of the job and cancel the job. When the virtual printer setting 1204 is selection operated, the screen transitions to a virtual printer setting screen 1211. The virtual printer can be set on the virtual printer setting screen.

On the virtual printer setting screen 1211, when the virtual printer 1 (1212) is selection operated, the screen transitions to a setting screen 1221 of the virtual printer 1. When a selection operation is performed on the virtual printer 2 (1213), the screen transitions to a setting screen of the virtual printer 2. When a selection operation is performed on the virtual printer 3 (1214), the screen transitions to a setting screen of the virtual printer 3. When the plus button (1215) is operated, the screen transitions to a screen for adding a virtual printer. When the return button (1216) is operated, the screen returns to the cloud printing service setting screen 1201.

On the setting screen 1221 of the virtual printer 1, it is possible to set a printer to be associated with the virtual printer 1. In the present example, three printers: a K16F-Printer01 (1222), a K16F-Printer02 (1223), and a K16F-Printer03 (1224) are displayed as logical printers. Each printer displays the attribute of device_type (device type) in FIG. 11. This indicates whether each printer is a physical printer or another virtual printer. By enabling the check box of each logical printer, selection of the logical printer is accepted, and association is performed with the virtual printer 1. The check box is an example of an accepting means for accepting selection of a printer.

In this way, it is possible not to select a virtual printer that requires the operation of the pull printing twice according to the need of the administrator user, and it is also possible to associate another virtual printer with the virtual printer as in the second example.

The display of the device type on the setting screen 1221 may display only the physical printer or may display only the virtual printer. In addition, the display mode of the printer may be changed without displaying the device type, and attention of the administrator user may be called when registering.

Furthermore, when the administrator user tries to check and associate "K16F-Printer03" without displaying the device type, the message "K16F-Printer03 is a virtual printer. Do you want to associate? " and the like may be displayed to call the attention of the administrator user.

### Fifth Embodiment

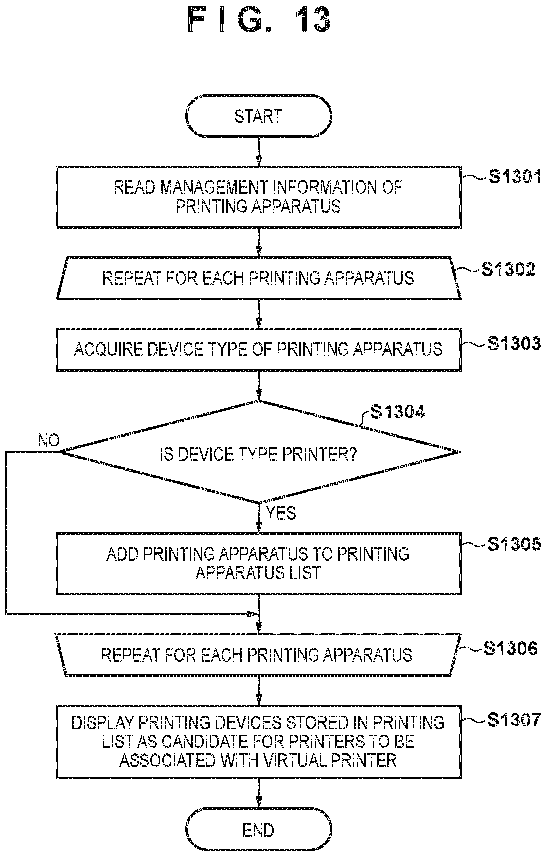

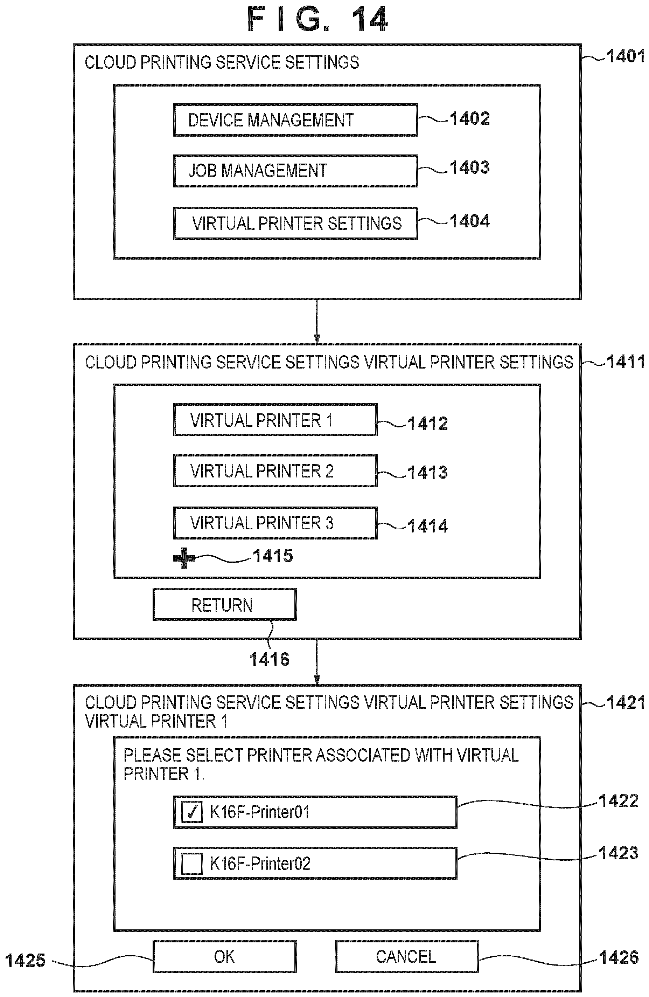

In the fourth example, an attribute indicating whether the printer is a physical printer or a virtual printer is displayed in a list of printers to be associated with the virtual printer. In the fifth example, when the device type is not a printer, it is not displayed on the setting screen of the virtual printer. Hereinafter, a process in which the cloud printing service of the fifth example displays a setting screen of a virtual printer will be described with reference to FIG. 13. The process described below is realized, for example, by the CPU 502 of the cloud print server of the cloud printing service 102 reading a program stored in the ROM 504 or the HDD 505 to the RAM 503 and executing the program. Hereinafter, the step number of each process included in the flowchart is indicated by a number starting with "S". The flowchart of FIG. 13 is a flowchart when the cloud printing service displays the setting screen 1421 of FIG. 14.

In S1301, the cloud printing apparatus management unit 604 of the cloud printing service 102 reads the management information of the logical printing apparatus described with reference to FIG. 11 from the storage unit 605. The virtual printer control unit 607 of the cloud printing service 102 repeats the processes of S1302 to S1306 for the logical printing apparatuses.

In S1303, the virtual printer control unit 607 of the cloud printing service 102 reads the device type of the logical printer, and the process proceeds to S1304.

In S1304, the virtual printer control unit 607 of the cloud printing service 102 determines whether or not the device type of the printing apparatus is a printer. If the device type is a printer (YES), the process proceeds to S1305, and if the device type is not a printer (NO), that is, if the device type is a virtual printer, the process skips S1305.

In step S1305, the virtual printer control unit 607 of the cloud printing service 102 adds the printing apparatus to the printing apparatus list.

When the processes from S1302 to S1306 are repeated for the logical printer, only the physical printer is stored in the printing apparatus list from the logical printer, and the virtual printer is not stored in the printing apparatus list. Taking the management information in FIG. 11 as an example, the printing apparatus 1111 and the printing apparatus 1112 are stored, and the printing apparatus 1113 is not stored in the printing apparatus list.

In S1307, the WebUI control unit 609 of the cloud printing service 102 displays the printing apparatus stored in the printing apparatus list as a candidate for a printer to be associated with the virtual printer in the virtual printer setting screen 1421 of FIG. 14.

In the present example, since only the physical printer is displayed as a candidate for the printing apparatus to be associated with the virtual printer, the virtual printer is not associated with the virtual printer. As a result, operability of setting of the virtual printer is improved for a user who does not prefer the selection of a plurality of print jobs.

### Sixth Embodiment

Next, a sixth example will be described. In the fifth example, whether or not to be associated with the virtual printer is determined using the value of the device attribute device_type (device type) stored in the device attribute information. In the sixth example, a device attribute indicating whether or not there is a pull printing function is newly defined, and whether or not to be associated with a virtual printer is determined using a value of the device attribute. In the following description, description of portions overlapping with the fifth example will be omitted, and only the differences will be described.

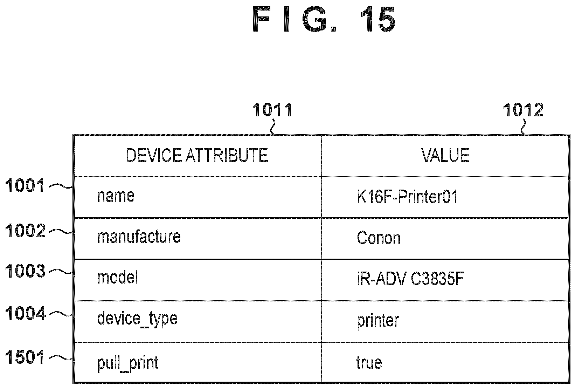

The device attribute information when registering a printing apparatus in a cloud printing service in the sixth example will be described with reference to FIG. 15. In FIG. 1, the printing apparatus 101 transmits the cloud printing service registration request 112 to the cloud printing service 102. The cloud printing service registration request 112 includes device attribute information of the printing apparatus 101. FIG. 15 illustrates the device attribute information. The description of the portion of the device attribute information in FIG. 15 overlapping with that in FIG. 10 will be omitted, and only the differences will be described.

The device attribute pull_print (1501) indicates whether or not the printing apparatus has a pull printing function. When true is set as the value of the present attribute, it indicates that the pull printing function is provided. On the other hand, if false is set, it indicates that the pull printing function is not provided. In the example of FIG. 15, true is set to the pull_print attribute.

In the above description, the device attribute information indicating the pull printing function is notified at the time of transmitting the cloud printing service registration request 112, but the device attribute information may be notified as the IPP attribute in the cloud printing service registration confirmation response 118 in FIG. 1.

In the sixth example, in the flowchart of FIG. 13 of the fifth example, the determination in S1304 is changed to "pull printing function is provided?" . In S1304, if the printing apparatus has the pull printing function (pull_print is true), the printing apparatus is added to the printing apparatus list in S1305. On the other hand, if the printing apparatus does not have the pull printing function (pull_print is false), S1305 is skipped and the printing apparatus is not added to the printing apparatus list. In this determination in the sixth example, both the determination by the device type of the fifth example and the determination by the pull printing function may be performed, or the determination by only the pull printing function may be performed. As a result, a printing apparatus that does not have a pull printing function is not associated with the virtual printer, and the convenience of the setting operation of the printing apparatus with respect to the virtual printer is improved.

### Seventh Embodiment

Next, a seventh example will be described. In the fifth example, the value of the device type stored in the device attribute information is used, and in the sixth example, whether or not to be associated with the virtual printer is determined by the presence or absence of the pull printing function. In the following description, description of the portions overlapping with the fifth and sixth examples will be omitted, and only the differences will be described.

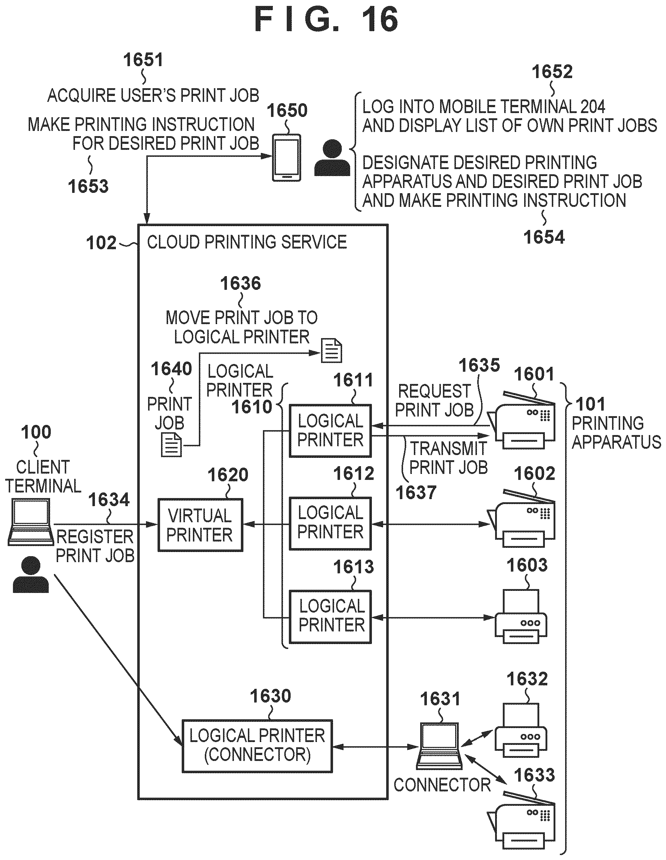

The seventh example is a mode in which a printing apparatus is caused to execute printing via a print connector. A system configuration of the seventh example will be described with reference to FIG. 16. In order to cause a printing apparatus to execute printing using the cloud printing service 102, the printing apparatus needs to be directly connected to a cloud print server. As illustrated in FIG. 16, there is a case where the printing apparatus 1632 and the printing apparatus 1633 are connected via a print connector 1631 such as a PC without directly connecting the printing apparatus to the cloud printing service. When the printing apparatus 1632 connected to the print connector 1631 such as a PC is caused to execute printing from the cloud printing service 102, the print connector 1631 such as a PC needs to be registered as the connector 1630 in the cloud printing service 102.

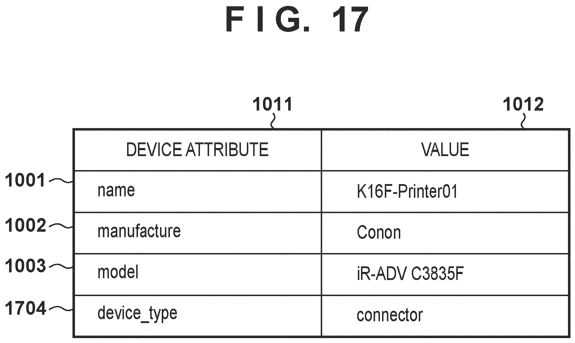

FIG. 17 illustrates device attribute information in the sixth example. The description of portions overlapping with those in FIG. 10 will be omitted, and only differences will be described. When the device attribute (device_type) is the connector (1704), it indicates that the printing apparatus is a print connector. In the sixth example, in the determination "Device type is printer?" in S1304 in the flowchart of the fifth example in FIG. 13, if it is a printer, the process proceeds to S1305 and the printing apparatus is added to the printing apparatus list. On the other hand, in the case of a virtual printer or a connector, S1305 is skipped and it is not added to the printing apparatus list. In addition to this determination in the seventh example, both determinations by the pull printing function in the sixth example may be performed, or determinations by only the device type may be performed. As a result, the print connector is not associated with the virtual printer, and the convenience of the setting operation of the printing apparatus with respect to the virtual printer is improved.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A cloud print system comprising a first cloud print server (102) and a second cloud print server (904); wherein
the first cloud print server comprises:
managing means (913) for managing a second virtual printer (922) of the second cloud print server in association with a first virtual printer (920) of the first cloud print server,
storing means (607) for storing a print job (960) submitted (961) to the first virtual printer in one or more first memory devices (505) in association with the first virtual printer, and
transmitting mean for transmitting (966) the print job stored in association with the first virtual printer to the second virtual printer according to an instruction from a user (953).

2. The cloud print system according to claim 1, wherein
the managing means (910) further manages one or more physical printers (101) in association with the first virtual printer.

3. The cloud print system according to claim 1, wherein
the instruction (953) from the user includes an instruction to submit the print job stored in association with the first virtual printer to the second virtual printer.

4. The cloud print system according to claim 1, wherein
the first cloud print server further comprises acquiring means (954) for acquiring the instruction from the user from a mobile terminal (950).

5. The cloud print system according to claim 4, wherein
the first cloud print server further comprises displaying means (950) for, after the instruction from the user, displaying prompting a printing instruction in the second cloud print server on the mobile terminal (950).

6. The cloud print system according to claim 1, wherein
the second cloud print server comprises,
managing means (940) for managing one or more printers (930) in association with the second virtual printer (922); and
transmitting means (972) for transmitting the print job transmitted to the second virtual printer to the printer based on an instruction (967) from the printer (931).

7. A second cloud print server system (904) including a second cloud printing service, the second cloud print server system comprising:
receiving means (966) for receiving a print job transmitted from a first cloud print server system (102), including a first cloud printing service that transmits the print job by storing the print job transmitted according to a printing instruction and receiving a release instruction with respect to the stored print job;
storing means (604) for storing the print job received by the receiving means; and
transmitting means (972) for transmitting the print job to a printer (931) upon receiving a release instruction (968, 969) with respect to the print job stored by the storing means.

8. The second cloud print server system according to claim 7, further comprising;
managing means (940) for managing one or more physical printers (930) in association with the second virtual printer.

9. The second cloud print server system according to claim 8, further comprising;
acquiring means (969) for an acquiring the instruction from the one or more physical printers (930).

10. A printing method in a cloud print system including a first cloud print server (102) that manages a second virtual printer (922) of a second cloud print server (904) in association with a first virtual printer (920), and the second cloud print server, the method comprising:
storing a print job (960) submitted to the first virtual printer in association with the first virtual printer; and
transmitting (966) the print job stored in association with the first virtual printer to the second virtual printer according to an instruction from a user (953).

11. A printing method in a second cloud print server system (944) including a second cloud print service, the method comprising:
receiving (966) a print job transmitted from a first cloud print server system(102), including a first cloud print service that transmits the print job stored in accordance with a printing instruction upon receiving a release instruction (969);
storing (607) the received print job; and
transmitting (971) the print job to a printer according to an instruction (968,969) for releasing the print job.

12. The printing method according to claim 11, wherein
each of the first cloud print service and the second cloud print service comprises a printer queue (607) that stores print jobs submitted to a virtual printer without designating a printer until the release instruction is received.

13. A cloud print system comprising a first cloud print server (102), a second cloud print server (904) and a printer (101, 930), wherein
the first cloud server comprises:
managing means (913) for managing a second virtual printer (922) of the second cloud print server (904) in association with a first virtual printer (920) of the first cloud print server;
storing means (607) for storing a print job (960) submitted (961) to the first virtual printer in one or more first memory devices (505) in association with the first virtual printer; and
in accordance with an instruction from a user (953), transmit (970) the print job stored in association with the first virtual printer to the second virtual printer, and
the second cloud print server comprising:
storing (907) means for storing the print job transmitted from the first cloud print server in association with the second virtual printer in one or more second memory devices (505), and
transmitting means (971) for transmitting the print job to the printer (931) according to receive a release instruction (968, 969) for the print job, and, wherein
the printer executes printing of the received print job.
